**Europäisches Patentamt**

(19) **European Patent Office**

**Office européen des brevets**

(11) Numéro de publication : **0 267 087 B1**

(12) **FASCICULE DE BREVET EUROPEEN**

(45) Date de publication du fascicule du brevet :
27.02.91 Bulletin 91/09

(51) Int. Cl.⁵ : **G01P 3/60**

(21) Numéro de dépôt : **87402282.5**

(22) Date de dépôt : **13.10.87**

(54) **Dispositifs de détection du glissement de la courroie d'entraînement d'une machine génératrice électrique entrainée par un moteur.**

(30) Priorité : **14.10.86 FR 8614235**

(43) Date de publication de la demande :
**11.05.88 Bulletin 88/19**

(45) Mention de la délivrance du brevet :
**27.02.91 Bulletin 91/09**

(84) Etats contractants désignés :
**DE ES GB IT**

(56) Documents cités :
**EP-A- 0 053 033**
**EP-A- 0 086 433**
**US-A- 4 263 578**

(73) Titulaire : **VALEO EQUIPEMENTS ELECTRIQUES MOTEUR**
**2, Rue André Boulle**
**F-94000 Creteil (FR)**

(72) Inventeur : **Ducrot, Christian**
**4, rue du Clos Saint-Denis**
**F-94000 Creteil (FR)**
Inventeur : **Bruneau, Hervé**
**4, rue de l'Aumônerie Bouchemaine**
**F-49000 Angers (FR)**

(74) Mandataire : **Martin, Jean-Jacques et al**
**Cabinet REGIMBEAU 26, Avenue Kléber**
**F-75116 Paris (FR)**

## Description

L'invention concerne des dispositifs de détection du glissement de la courroie d'entraînement d'une machine génératrice électrique entraînée par un moteur.

Les génératrices électriques, telles qu'un alternateur, entraînées par un moteur au moyen d'une courroie sont de nos jours largement utilisées dans le domaine de l'automobile. Cette courroie d'entraînement peut être mal tendue ou se détendre à l'usage. Compte tenu de la puissance normalement transmise par le moteur, plusieurs kilowatts, la courroie d'entraînement peut alors glisser dans la gorge des poulies d'entraînement. Ce glissement a pour effet de provoquer une usure rapide puis une cassure de la courroie.

En particulier, dans le cas de véhicules automobiles poids lourds, une accélération importante due au moteur entraîne un patinage et un glissement de la courroie d'entraînement, lequel a pour effet de provoquer un lustrage des faces de la courroie et une augmentation cumulative du phénomène de glissement.

Actuellement, il n'existe, pour l'essentiel, que des dispositifs détectant la cassure de la courroie d'entraînement. Ces systèmes déclenchent un signal d'alarme lorsque l'alternateur, en l'absence d'entraînement, ne débite plus. Ces dispositifs, s'ils permettent de détecter la panne totale d'alternateur, provoquée par la rupture de la courroie d'entraînement, ne permettent cependant pas de prévenir celle-ci.

En outre, le document US-A-4 263 578 décrit un système de détection de fonctionnement défectueux d'une courroie d'entraînement dans lequel un comptage d'un nombre d'impulsions est effectué pendant une durée de référence, ce type de système mettant en oeuvre essentiellement un décomptage d'impulsions de type discret. Ce type de système ne permet pas une détection de glissement aux faibles valeurs de vitesses de glissement.

La présente invention a pour but de remédier au problème précité par la mise en oeuvre des dispositifs de détection du glissement de la courroie d'en traînement de la génératrice électrique, ou alternateur, entraînée par un moteur.

Un autre objet de la présente invention est la mise en oeuvre des dispositifs de détection du glissement de la courroie d'entraînement d'une génératrice électrique entraînée par un moteur permettant d'assurer une détection pour de faibles valeurs de glissement.

Un autre objet de la présente invention est la mise en oeuvre des dispositifs de détection du glissesement de la courroie d'entraînement d'une machine génératrice entraînée par un moteur fonctionnant quel que soit le rapport de transmission entre le moteur et l'alternateur ou génératrice électrique.

Les dispositifs de détection du glissement de la courroie d'entraînement d'une machine génératrice électrique entraînée par un moteur sont donnés dans les revendications 1 et 3.

L'invention trouve application aux systèmes d'alimentation en énergie électrique par génératrice électrique entraînée par un moteur des véhicules personnels, poids lourds, de transport en commun, bateaux, engins agricoles, de travaux publics ou analogues.

Elle sera mieux comprise à la lecture de la description ci-après et à l'observation des dessins dans lesquels :
– la figure 1 représente une vue générale du dispositif objet de l'invention,
– la figure 2 représente un dispositif, sous forme analogique, d'un détail de réalisation des circuits de détection de vitesse de glissement de courroie conformément à l'invention,
– la figure 3 représente un dispositif, sous forme numérique, d'un détail de réalisation des circuits de détection de vitesse de glissement de courroie co nformément à l'invention.

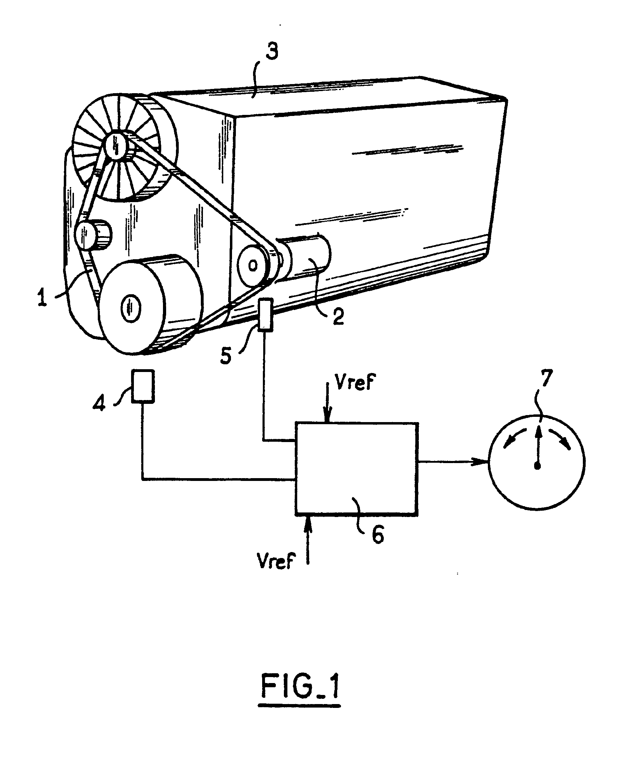

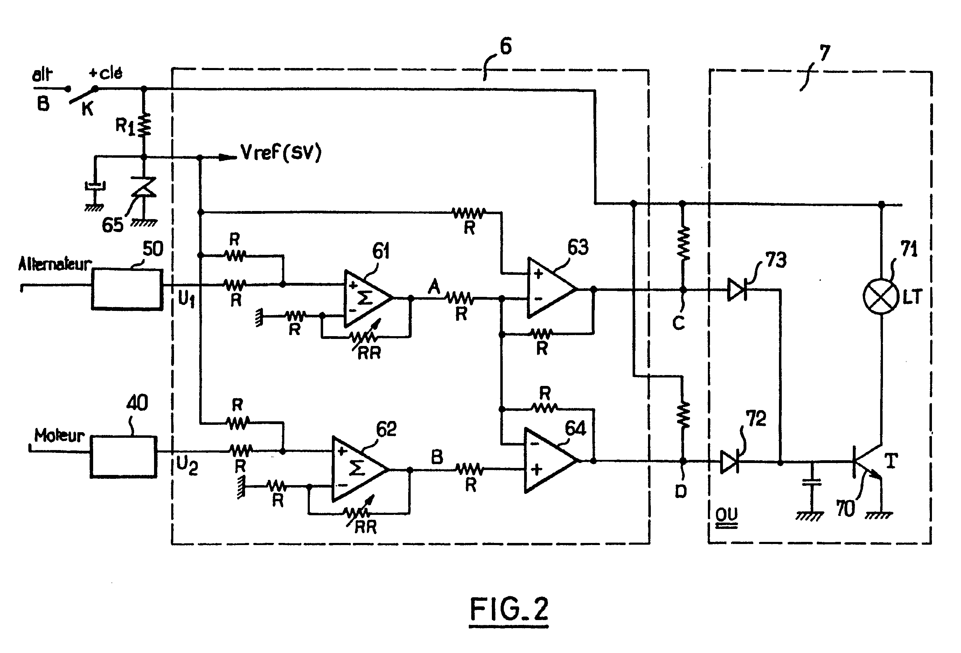

Le dispositif de détection du glissement de la courroie d'entraînement d'une machine génératrice électrique entraînée par un moteur objet de l'invention sera tout d'abord décrit, de manière générale, en liaison avec la figure 1 et la figure 2.

Conformément à la figure précitée, la courroie d'entraînement est notée 1, la machine génératrice électrique est notée 2 et le moteur est lui-même noté 3.

Le dispositif de détection du glissement de la courroie d'entraînement d'une machine génératrice électrique entraînée par un moteur objet de la présente invention comprend, ainsi que représenté en outre en figure 1, des moyens 4 de détection et de mesure de la vitesse instantanée de rotation du moteur 3 et des moyens 5 de détection et de mesure de la vitesse instantanée de rotation de la machine génératrice électrique 2.

Il comprend également des moyens 6 de comparaison des vitesses de rotation moteur et de rotation machine génératrice par rapport à une valeur de référence. Sur la figure 1, la tension de référence est notée Vref. Des moyens 7 de signalisation sont en outre prévus pour effectuer un affichage de la présence de glissement de la courroie 1 sur comparaison positive des vitesses par rapport à cette valeur de référence. Par comparaison positive, on entend bien entendu l'existence d'une différence entre les vitesses instantanées mesurées de rotation moteur et de rotation de la machine génératrice par rapport à la valeur de référence précitée.

Dans le cas où la génératrice électrique est entraînée par le moteur au moyen d'une courroie d'entraînement et où l'ensemble constitue le système d'alimentation d'un véhicule automobile, la machine génératrice électrique 2 peut être constituée par un alternateur. Les moyens 5 de détection et de mesure de la vitesse instantanée de rotation de la machine génératrice 2, ou alternateur, peuvent alors comprendre, de façon non limitative, directement connecté à une phase de l'alternateur, un circuit 50 de conversion fréquence tension délivrant une tension continue représentative de la vitesse de rotation de l'alternateur.

Dans ce même cas, le moteur 3 est constitué par un moteur à combustion interne et les moyens 4 de détection et de mesure de la vitesse instantanée de rotation de celui-ci peuvent comprendre, de façon non limitative, directement connecté au circuit d'allumage ou de détection vitesse du moteur, un circuit 40 de conversion fréquence-tension, noté 40 sur la figure 2. Le convertisseur fréquence tension 40 peut alors être directement connecté au système d'allumage du moteur à combustion interne, par l'intermédiaire d'un capteur, ce capteur étant par exemple connecté au circuit de rupture d'allumage du moteur à combustion interne ou pouvant consister en un capteur de point mort haut ou analogue. Les circuits de conversion fréquence tension 40 et 50 représentés en figure 2 peuvent avantageusement être constitués par des circuits intégrés commercialisés sous la référence LM 2907 par la société MOTOROLA.

Une description plus détaillée selon un mode de réalisation avantageux en circuit analogique des moyens 6 de comparaison des vitesses de rotation moteur et de rotation machine génératrice sera maintenant donnée en liaison avec la figure 2.

Conformément à la figure précitée, les moyens de comparaison 6 peuvent comprendre des circuits sommateurs 61, 62, permettant d'engendrer un signal somme du signal délivré par le circuit de conversion fréquence tension 40, respectivement 50, et d'une tension représentative de la valeur de référence notée Vref. Sur la figure 2, l'ensemble des résistances de polarisation des circuits sommateurs 61 et 62 constitués par des amplificateurs différentiels normalement disponibles dans le commerce est noté R. De même, les résistances ajustables utilisées pour la polarisation de ces circuits sommateurs sont notées RR, ces résistances ajustables permettant d'effectuer les réglages des gains de rétroaction des amplificateurs différentiels précités. On comprendra bien entendu que l'ensemble des résistances de polarisation noté R présente des valeurs différentes correspondant aux indications de mise en oeuvre de ces amplificateurs.

En outre, les moyens 6 de comparaison de vitesse de rotation moteur et de rotation machine génératrice comprennent des circuits comparateurs notés 63 et 64, dont la borne positive reçoit respectivement la valeur de référence notée Vref, et la sortie du circuit sommateur 62 et dont la borne négative reçoit le signal délivré par le circuit sommateur 61.

De manière avantageuse, la tension de référence Vref peut être engendrée à partir de l'alimentation batterie notée B et d'un contacteur ou clef de contact notée K à partir d'un circuit constitué par une résistance $R^1$ et une capacité notée C, lesquelles sont connectées en parallèle sur une diode Zener 65, permettant d'engendrer la tension de référence Vref.

Ainsi qu'il apparaît en outre en figure 2, les moyens de signalisation de glissement 7 peuvent avantageusement comprendre un transistor de commutation noté 70, chargé par une lampe témoin notée 71. Le transistor 70 est commandé par les sorties des circuits comparateurs 63 et 64, branchés en parallèle par l'intermédiaire d'une diode 73, respectivement 72.

Le fonctionnement du dispositif représenté en figure 2 est le suivant.

Les signaux délivrés par les convertisseurs fréquence tension 50 et 40 sont respectivement définis par U1 et U2 et les signaux délivrés par les circuits sommateurs 61 et 62 sont respectivement désignés par A et B. Ainsi, le signal A vérifie la relation :

$$A = \alpha(Vref + U1)$$

et le signal B vérifie la relation :

$$B = \beta(Vref + U2)$$

Les convertisseurs fréquence tension délivrent un signal continu U1 et U2 de niveau compris entre 0 et 5 volts sur la gamme des vitesses correspondante du moteur et de l'alternateur ou génératrice électrique, la valeur nulle des signaux U1 et U2 étant obtenue pour l'arrêt du moteur et de l'alternateur.

Les différentes phases de fonctionnement des moyens 6 de comparaison représentés en figure 2, peuvent être mises en évidence, de manière ci-après :

– à l'arrêt du moteur, le comparateur 63 recevant la tension de référence sur sa borne positive a pour effet de commander l'éclairage de la lampe témoin 71 par l'intermédiaire du transistor 70.

– lors de l'amorçage de l'alternateur, le moteur ayant démarré, le signal B délivré par le circuit sommateur 62 est supérieur au signal A et la lampe témoin 71 est maintenue éclairée jusqu'à l'équilibre des vitesses du moteur et de l'alternateur, équilibre obtenu après amorçage de l'alternateur, la tension U1 étant alors établie.

– en fonctionnement normal, c'est-à-dire en régime permanent du moteur et de l'alternateur, le signal A est supérieur à la tension de référence Vref et le signal B est inférieur au signal A du fait d'un réglage de départ et de la valeur des résistances de polarisation par exemple. Dans ce cas, la lampe témoin 71 s'éteint en l'absence de défaut de glissement de la courroie d'entraînement.

– en cas de glissement de la courroie d'entraînement, le signal A reste supérieur à la tension de référence et le signal B est supérieur au signal A. Dans ce cas, la lampe témoin 71 alimentée par le transistor 70 et par la diode 72 s'éclaire.

On notera en outre que, en présence d'une coupure de la courroie, le moteur étant en fonctionnement, mais l'alternateur étant alors arrêté, la lampe témoin 71 s'éclaire également.

Le dispositif objet de l'invention dans son mode de réalisation tel que représenté en figure 2 assure ainsi une comparaison permanente entre la vitesse de rotation moteur et la vitesse de rotation alternateur.

Les deux convertisseurs fréquence tension 40 et 50 engendrent les tensions U1 et U2 précitées, U1 représentant la tension image de la vitesse alternateur et U2 représentant la tension image de la vitesse moteur.

Ces deux informations rentrent respectivement dans les sommateurs 61 et 62, le sommateur 61 délivrant l'information ou signal A, et le sommateur 62 délivrant l'information ou signal B. L'information A est ensuite comparée à la tension de référence Vref, l'information résultante étant à nouveau comparée à la tension B par l'intermédiaire des signaux C et D délivrés respectivement par les comparateurs 63 et 64 au niveau des diodes 72 et 73 constituant on OU logique, permettant la commande du transistor 70.

Lors des phases de fonctionnement précédemment citées, les valeurs des différents signaux A, B, C et D sont les suivantes :

– à l'arrêt, U1 et U2 sont à zéro. le signal A est égal à $\alpha$ x Vref ou $\alpha$ représente le gain en boucle fermée réglé au moyen de la résistance RR du sommateur 61. Un réglage convenable de ce gain a pour effet d'engendrer un signal C délivré par le comparateur 63 correspondant à un niveau logique haut noté 1, car la tension de référence Vref est supérieure à la valeur du signal A par définition du gain précité. De la même manière, le signal B est égal à $\beta$ x Vref, cette valeur du signal B ayant pour effet d'engendrer en sortie du comparateur 64, un signal D de niveau logique bas noté 0, car le signal A est supérieur au signal B de par la définition du gain précité. Le transistor 70 est alors saturé et la lampe témoin 71 signale l'arrêt de l'alternateur.

– lors de la mise en route du véhicule, celle-ci a pour effet d'entraîner l'amorçage de l'alternateur. Dans ce cas U1 est inférieur à U2.

Le signal A vérifie alors la relation :

$$A = \alpha \ (Vref + U1)$$

et le signal B vérifie la relation :

$$B = \beta \ (Vref + U2)$$

avec B > A. Le potentiel ou valeur du signal C n'est pas défini, mais le signal D reste à un niveau logique haut noté 1 puisque le signal B est supérieur au signal A. Ainsi, la lampe témoin reste allumée.

– la phase de régime permanent du moteur et de l'alternateur correspond à un régime dans lequel les signaux A et B ont la valeur algébrique indiquée à l'étape précédente. Le signal A devient supérieur à la tension de référence Vref, et le signal C est au niveau logique bas noté 0. Le signal B est inférieur au signal A en régime permanent, ce qui permet d'obtenir un signal B de niveau logique bas noté 0. Dans le cas où un glissement de la courroie apparaît, le signal A est toujours supérieur à la tension de référence Vref, ce qui a pour effet d'amener le signal C niveau logique bas noté 0. Par contre, la tension U1 décroît ce qui a pour effet de rendre la tension D supérieure à la tension A, le signal D passant alors au niveau logique 0 noté A. Les passages du signal B au niveau logique 1 permet alors la commande du transistor 70 et de la lampe témoin 71 laquelle s'allume.

– en cas de coupure de la courroie, la tension A est inférieure à la tension de référence Vref, ce qui permet d'entraîner la conduction du transistor 70 grâce au signal C qui devient égal au potentiel délivré par la clef K, c'est-à-dire le potentiel délivré par la batterie d'alimentation du système.

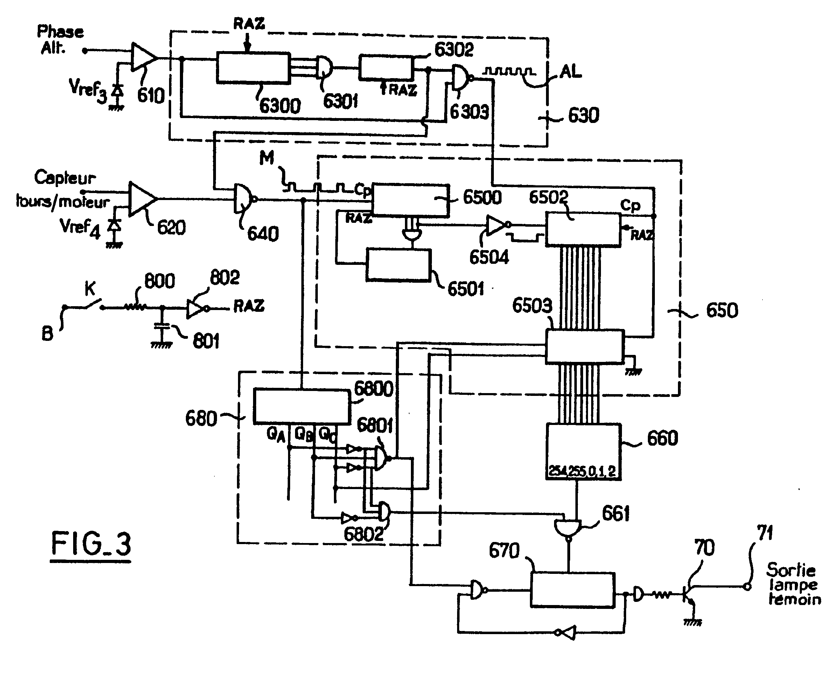

Une variante de réalisation non limitative avantageuse des moyens 6 de comparaison des vitesses de rotation,selon un mode de réalisation en technique numérique,sera maintenant décrit en liaison avec la figure 3.

Selon la figure précitée, les moyens 6 de comparaison des vitesses de rotation moteur et de rotation machine génératrice, ou alternateur, peuvent comprendre des premiers moyens comparateurs notés 610 recevant un signal représentatif de la vitesse de l'alternateur ou génératrice électrique 2 et une valeur de référence notée Vref3 sur la figure 3.

Les moyens 6 de comparaison des vitesses de rotation moteur et de rotation machine génératrice comprennent en outre des moyens 630 de temporisation à l'initialisation recevant le signal délivré par les premiers moyens comparateurs 610 et per tant de délivrer un signal de déverrouillage de commande pour une valeur d'amplitude du signal représentative de la vitesse de l'alternateur supérieure à la valeur de référence Vref3. Les moyens de temporisation à l'initialisation 630 permettent en outre d'engendrer des impulsions calibrées représentatives de la vitesse de rotation machine génératrice, alternateur 2.

Les moyens 6 de comparaison des vitesses de rotation moteur et de rotation machine génératrice comprennent en outre des deuxièmes moyens comparateurs 620 recevant un signal représentatif de la vitesse moteur et une valeur de référence notée Vref4. On notera bien entendu, que de façon non limitative, les valeurs de référence précédemment citées Vref3 et Vref4, peuvent avoir des valeurs différentes.

Les moyens de comparaison 6 des vitesses de rotation moteur et de rotation machine génératrice comprennent également une porte NON-ET, notée 640, recevant sur une première entrée le signal délivré par les deuxièmes moyens comparateurs 620 et sur une deuxième entrée le signal de déverrouillage engendré par les moyens de temporisation 630. La porte NON-ET 640 délivre des impulsions calibrées, représentatives de la vitesse de rotation moteur.

Ainsi qu'il apparait en outre en figure 3, les moyens 6 de comparaison des vitesses de rotation moteur et de rotation machine génératrice comprennent des moyens 650 compteurs-décompteurs et des moyens décodeurs 660 permettant d'engendrer un signal logique de présence glissement courroie 1. Des moyens 670 de commande d'affichage défauts sont en outre prévus et reçoivent le signal logique de présence glissement. Les moyens 670 délivrent un signal de commande d'affichage présence glissement à un transistor de commande lequel, de manière analogue au mode de réalisation analogique décrit en figure 2, est référencé 70 sur la figure 3.

On notera cependant que de manière distincte par rapport au mode de réalisation analogique précédemment décrit dans la figure 2, le mode de réalisation en technique numérique de la figure 3 n'implique pas l'utilisation de convertisseurs fréquence tension. En effet, l'entrée de phase des premiers moyens de comparaison 610 et l'entrée capteur du nombre de tours moteur des deuxièmes moyens de comparaison 620 peuvent avantageusement être reliées directement à tout circuit capteur susceptible de délivrer un signal représentatif, respectivement de la phase alternateur et des impulsions périodiques de rotation du moteur, telles que les impulsions de rupture d'allumage de celui-ci par exemple ou les impulsions périodiques délivrées par un détecteur de point mort haut dans le cas d'un moteur de type Diesel. On comprendra ainsi que les moyens de comparaison 610 et 620 assurent en fait une mise en forme des impulsions périodiques délivrées respectivement par l'alternateur ou génératrice électrique et par les circuits d'allumage du moteur et les circuits de détection du mouvement périodique du moteur.

Ainsi qu'il apparaît en outre en figure 3, les moyens 630 de temporisation peuvent comporter avantageusement, connectés en cascade, un compteur de temporisation 6300, une porte ET 6301 et un circuit monostable 6302. Les moyens 630 de temporisation comportent en outre une porte NON-ET 6303, dont une première entrée est connectée en sortie du monostable 6302 et dont une deuxième entrée est connectée en sortie des premiers moyens comparateurs 610. La porte NON-ET 6303 délivre les impulsions calibrées représentatives de la vitesse de rotation de l'alternateur ou machine génératrice 2.

Selon le mode de réalisation de la figure 3, les moyens de comptage - décomptage 650 peuvent avantageusement être constitués par un premier compteur 6500 et une mémoire à circuit NON-ET 6501, recevant les impulsions représentatives de la vitesse de rotation moteur et permettant d'engendrer un signal d'autorisation de comptage.

Les moyens de comptage-décomptage 650 comportent en outre un compteur d'initialisation 6502, recevant d'une part le signal d'autorisation de comptage et d'autre part les impulsions représentatives de la vitesse de rotation machine génératrice 2.

Un décompteur 6503 est associé au compteur d'initialisation 6502 et reçoit en liaison parallèle, par exemple, un signal représentatif de l'état de comptage du compteur d'initialisation 6502.

Le décodeur 660 peut avantageusement être constitué par un décodeur NON-ET recevant en liaison parallèle un signal représentatif de l'état de décomptage du décompteur 6503, et permettant d'engendrer le signal logique de présence glissement courroie précédemment cité pour des valeurs remarquables de

5

l'état de décomptage du décompteur 6503, ainsi qu'il sera décrit plus en détail ci-après dans la description.

Des moyens de synchronisation ou des moyens séquenceurs 680 sont en outre prévus afin d'assurer le séquencement de l'ensemble des opérations de comptage numérique des impulsions engendrées par la rotation du moteur et de l'alternateur. Les moyens de synchronisation ou moyens séquenceurs 680 comprennent avantageusement un compteur de synchronisation 6800 délivrant en sortie des états logiques de référence notés QA, QB, QC et des portes logiques 6801, 6802.

Le fonctionnement du dispositif dans son mode de réalisation numérique tel que représenté en figure 3 est le suivant.

le signal de phase alternateur est pris en compte à partir d'un certain niveau de signal, par les premiers moyens comparateurs 610, par rapport à la tension de référence Vref3. Le compteur de temporisation 6300 permet d'éliminer le régime transitoire de montée en tension de l'alternateur.

Suite à cette étape transitoire, la porte ET 6301 et le circuit monostable 6302 permettent d'engendrer le signal de déverrouillage, lequel autorise le démarrage des cycles de contrôle de glissement en permettant le passage des impulsions délivrées par le capteur directement relié au moteur et au moyen comparateur 620, vers les unités de comptage. L'autorisation du démarrage du cycle de contrôle, est ainsi effectuée par l'intermédiaire du signal de déverrouillage, lequel commande la porte NON-ET 640 connectée en sortie des deuxièmes moyens comparateurs 620. Sur la figure 3, les impulsions délivrées respectivement par la génératrice électrique ou alternateur sont notées AL, alors que les impulsions délivrées par les circuits d'allumage du moteur par exemple et transmises par la porte NON-ET 640 sont notées M.

Suite à l'étape phase d'initialisation précédemment décrite, le compteur constituant le premier compteur 6500 décompte un nombre d'impulsions moteur M prédéterminé, ce nombre prédéterminé étant par exemple enregistré et mémorisé au niveau de la mémoire circuit NON-ET 6501. Parallèlement, le premier compteur délivre un signal d'autorisation de comptage au compteur d'initialisation 6502 par l'intermédiaire d'un inverseur 6504. Le compteur 6502 reçoit alors sur une entrée de comptage, les impulsions de phase alternateur notées AL emmagasinant sur le temps déterminé par le nombre d'impulsions moteur, un nombre d'impulsions de phase alternateur destiné à servir de référence sur le temps considéré. Le premier compteur 6500 provoque ainsi une séquence de comptage du compteur d'initialisation, le premier compteur 6500 se verrouillant ensuite.

La référence du nombre d'impulsions de phase alternateur étant emmagasinée dans le compteur 6502, le compteur de synchronisation 6800 du séquenceur 680 permet alors la réalisation de la séquence ci-après :

– transfert du contenu du compteur 6502 dans le décompteur 6503,
– décomptage du nombre d'impulsions engendré par la phase alternateur AL par le décompteur 6503, pendant un temps égal au temps déterminé précité.
–comparaison de ce décompte par rapport à la valeur de référence précédente,
– test du résultat.

Cette séquence se reproduit tant que le moteur tourne. Les sorties notées QA, QB et QC du compteur d'initialisation 6800 sont dans le mode de réalisation agencées de façon à satisfaire à la table de vérité ci-après :

| QC | QB | QA | Opération test |
|----|----|----|----------------|
| O | O | O | |
| O | O | 1 | |
| O | 1 | O | initialisation |
| O | 1 | 1 | du décompteur |
| 1 | O | O | |
| 1 | O | 1 | |
| 1 | 1 | O | décomptage |
| 1 | 1 | 1 | |
| ı | ı | ı | |
| ı | ı | ı | |

Après étape ou phase de décomptage par le décompteur 6503 précédemment décrite, le décodeur 660 constitué par des portes logiques de type NON-ET par exemple, permet de ressortir des valeurs remarquables du décompte précité. Le décodeur 660 constitué par une porte NON-ET permet le décodage du résultat du décomptage sur huit bits par exemple. Dans ce cas, lorsque le décompte effectué par le décompteur 6503 diffère de la valeur de référence de plus ou moins une ou deux impulsions, les valeurs remarquables délivrées par le décodeur peuvent avantageusement être représentées par les valeurs 1, 2, respectivement 254, 255 pour un décodage sur huit bits.

Ainsi, lorsque le nombre d'impulsions décomptées par le décompte au niveau du décompteur 6503 correspond à la valeur de référence ou à une valeur très voisine de celle-ci, la valeur zéro ou des valeurs 1, 2 et 254, 255 proches de la valeur zéro pour un compteur cyclique sur 8 bits sont obtenues, l'ensemble de ces valeurs correspondant à une plage de valeurs proches de la valeur de référence correspondant à un glissement nul ou à un glissement acceptable positif ou négatif de faible valeur. Les valeurs précitées 0, 1, 2, 254, 255 permettent d'engendrer un signal logique de niveau haut, de niveau 1. Dans le cas contraire, lorsque le nombre d'impulsions décomptées par le décompte est différent des cinq valeurs précitées, la valeur du signal logique précité correspond à un niveau bas noté zéro.

La valeur logique 1 du signal logique précédemment décrite est validée par l'intermédiaire d'une porte NON-ET 661, lors d'une opération de test engendrée par le séquenceur 680 et permet alors la remise à zéro des moyens 670 de commande d'affichage de défauts et en définitive l'absence de signalisation de défauts.

Au contraire, dans le cas où le signal logique délivré par le décodeur 660 est maintenu au niveau bas, niveau logique zéro, pendant plusieurs cycles définis par le séquenceur 680 précédemment décrit, et en particulier par le compteur de synchronisation 6800 et par les portes logiques 6801, 6802, le compteur 670 se bloque et délivre un signal de commande du transistor de commutation 70, lequel provoque l'allumage de la lampe témoin 71. De manière avantageuse non limitative, le nombre de cylces sur lequel le compteur constituant les moyens de commande 670 atteint son état de verrouillage peut être pris égal à huit. Les moyens 670 de commande d'affichage assurent ainsi un comptage d'un nombre déterminé d'impulsions de séquencement délivrées par le compteur de synchronisation 6800, afin d'engendrer, pour un nombre correspondant desdites impulsions, le signal de commande d'affichage présence glissement.

Le fonctionnement du dispositif dans son mode de réalisation numérique précédemment décrit en relation avec la figure 3, peut être schématisé de la manière ci-après.

Lors du démarrage du véhicule, une initialisation automatique enregistre le rapport de transmission existant entre le moteur et l'alternateur. Le système compte alors le nombre d'impulsions de phase alternateur compris entre un nombre donné d'impulsions délivrées par le capteur de vitesse de rotation du moteur. Ce chiffre est alors mémorisé dans le compteur 6502.

Le dispositif tel que décrit permet alors de contrôler ensuite, en permanence, la constance du rapport précité. Ce contrôle s'effectue en trois étapes ou phases successives pilotées par les moyens de synchronisation 680 constitués par le compteur de synchronisation 6800 et les portes logiques 6801, 6802.

Les trois phases précitées peuvent être résumées de la façon ci-après :
– comptage du nombre d'impulsions de phase alternateur compris entre un nombre déterminé d'impulsion délivré par le capteur de vitesse moteur,
– comparaison de ce résultat avec le chiffre conservé dans le compteur de référence 6502,
– transmission du résultat vers la commande d'affichage de défauts, laquelle, le cas échéant, provoquera la signalisation d'une anomalie par l'intermédiaire du décodeur 660 et des moyens de commande d'affichage de défauts 670.

On remarquera en particulier que dans le système réalisé selon la version numérique, le décompte des impulsions de phase alternateur pendant un nombre déterminé d'impulsions de phase moteur, a pour effet de mesurer le rapport de vitesse du moteur et de l'alternateur. La détection du glissement est donc ainsi effectuée par comparaison sur un nombre d'impulsions et est donc ainsi rendue indépendante de la vitesse propre du moteur et de l'alternateur.

On remarquera également que le mode de réalisation analogique tel que décrit en figure 2, en raison des comparaisons successives des signaux représentatifs de la vitesse de rotation alternateur et de la vitesse de rotation moteur a une valeur de référence Vref commune puis de la comparaison logique de ces signaux par l'intermédiaire du circuit OU constitué par les diodes 72 et 73 permet également de rendre la détection de glissement indépendante de la valeur instantanée de la vitesse de rotation du moteur et de l'alternateur dans la plage de vitesse considérée.

En outre, dans le cas particulier du mode de réalisation de la figure 3, une remise à zéro générale peut être obtenue, celle-ci notée RAZ sur cette figure, pouvant comporter, de manière connue, un circuit à résistance 800, capacité 801, auxquels sont connectés un circuit inverseur 802, délivrant le signal de remise à zéro, la résistance 800 étant d'autre part connectée à la clef de contact K, elle-même reliée à la batterie B

7

du véhicule.

On a ainsi décrit un dispositif de détection de glissement de la courroie d'entraînement d'une machine génératrice électrique entraînée par un moteur particulièrement remarquable en ce que, outre la détection de la rupture de la courroie, ce dispositif permet de détecter le glissement de la courroie par rapport à la poulie d'entraînement du moteur et de l'alternateur ou machine génératrice électrique, ce dispositif permettant en cela de prévenir toute usure prématurée et incontrôlée de la courroie et donc la rupture de celle-ci.

Le dispositif de détection du glissement de la courroie d'entraînement d'une machine génératrice électrique entraînée par un moteur objet de l'invention est en outre remarquable en ce que, dans les modes de réalisation décrits, le système fonctionne quel que soit le rapport de transmission entre le moteur et l'alternateur.

Dans le cas du mode de réalisation analogique tel que représenté en figure 2, un réglage initial en fonction du type de moteur considéré est bien entendu nécessaire selon la plage de vitesse de fonctionnement envisagée.

Au contraire, dans le cas du mode de réalisation numérique tel que représenté en figure 3, aucun réglage n'est nécessaire puisque le temps de décomptage des impulsions de phase alternateur est modulé directement en fonction de la vitesse d'entraînement de celui-ci.

## Revendications

1. Dispositif de détection du glissement de la courroie d'entraînement (1) d'une machine (2) génératrice électrique entraînée par un moteur (3), comprenant des moyens (4) de détection et de mesure de la vitesse instantanée de rotation du moteur, des moyens (5) de détection et de mesure de la vitesse instantanée de rotation de la machine génératrice, des moyens (6) de comparaison des vitesses de rotation moteur et de rotation machine génératrice par rapport à une valeur de référence (Vref), et des moyens (7) de signalisation de glissement sur comparaison, positive, desdites vitesses par rapport à cette valeur de référence, caractérisé en ce que ladite machine génératrice électrique (2) étant constituée par un alternateur, lesdits moyens (5) de détection et de mesure de la vitesse instantanée de rotation de celui-ci comprennent, directement connecté à une pase de l'alternateur, un circuit (50) de conversion fréquence tension délivrant une tension continue représentative de la vitesse de l'alternateur, et en ce que ledit moteur (3) étant constitue par un moteur à combustion interne, lesdits moyens (4) de détection et de mesure de la vitesse instantanée de rotation de celui-ci comprennent, directement connecté aux circuits d'allumage ou de détection vitesse du moteur, un circuit (40) de conversion fréquence-tension, les moyens (6) de comparaison des vitesses de rotation moteur et de rotation machine génératrice comprenant :

– des circuits sommateurs (61, 62) permettant d'engendrer des signaux sommes des signaux délivrés par les circuits de conversion fréquence tension (40, 50) et d'une tension représentative de la valeur de référence (Vref),

– des circuits comparateurs (63, 64) dont les bornes positives reçoivent respectivement la valeur de référence et la sortie d'un circuit sommateur (62) et dont les bornes négatives reçoivent le signal délivré par l'autre circuit sommateur (61) respectivement.

2. Dispositif selon la revendication 1, caractérisé en ce que lesdites moyens de signalisation de glissement comportent un transistor de commutation (70) chargé par une lampe témoin (71), ledit transistor (70) étant commandé par les sorties des circuits comparateurs branchées en parallèle par l'intermédiaire d'une diode (72, 73).

3. Dispositif de détection du glissement de la courroie d'entraînement (1) d'une machine (2) génératrice électrique entraînée par un moteur (3), comprenant des moyens (4) de détection et de mesure de la vitesse instantanée de rotation du moteur, des moyens (5) de détection et de mesure de la vitesse instantanée de rotation de la machine génératrice, des moyens (6) de comparaison des vitesses de rotation moteur et de rotation machine génératrice par rapport à une valeur de référence (Vref), et des moyens (7) de signalisation de glissement sur comparaison, positive, desdites vitesses par rapport à cette valeur de référence, caractérisé en ce que ladite ma chine génératrice électrique (2) étant constituée par un alternateur, lesdits moyens (5) de détection et de mesure de la vitesse instantanée de rotation de celui-ci comprennent, directement connecté à une phase de l'alternateur, un circuit (50) de conversion fréquence tension délivrant une tension continue représentative de la vitesse de l'alternateur, et en ce que ledit moteur (3) étant constitué par un moteur à combustion interne, lesdits moyens (4) de détection et de mesure de la vitesse instantanée de rotation de celui-ci comprennent, directement connecté aux circuits d'allumage ou de détection vitesse du moteur, un circuit (40) de conversion fréquence-tension, les moyens (6) de comparaison des vitesses de rotation moteur et de rotation machine génératrice comprenant :

– des premiers moyens comparateurs (610) recevant un signal représentatif de la vitesse alternateur, et une valeur de référence (Vref3)

– des moyens (630) de temporisation à l'initialisation recevant le signal délivré par les premiers moyens comparateurs (610), et permettant de délivrer un signal de déverrouillage de commande pour une valeur d'amplitude du signal représentative de la vitesse alternateur supérieure à la valeur de référence (Vref3) et des impulsions calibrées représentatives de la vitesse de rotation machine génératrice,

– des deuxièmes moyens comparateurs (620) recevant un signal représentatif de la vitesse moteur et une valeur de référence (Vref4),

– une porte NON-ET (640) recevant sur une première entrée le signal délivré par les deuxièmes moyens comparateurs et sur une deuxième entrée le signal de déverrouillage engendré par lesdits moyens de temporisation, et délivrant des impulsions calibrées représentatives de la vitesse moteur,

– des moyens (650) compteurs-décompteurs et des moyens décodeurs (660) permettant d'engendrer un signal logique de présence glissement courroie (1),

– des moyens (670) de commande affichage défaut recevant ledit signal logique de présence glissement, et délivrant un signal de commande d'affichage présence glissement.

4. Dispositif selon la revendication 3, caractérisé en ce que lesdits moyens (630) de temporisation comportent connectés en cascade :

– un compteur de temporisation (6300), une porte ET (6301) et un circuit monostable (6302),

– une porte NON-ET (6303) dont une première entrée est connectée en sortie du monostable (6302) et dont une deuxième entrée est connectée en sortie des premiers moyens comparateurs (610) et délivrant lesdites impulsions calibrées représentatives de la vitesse de l'alternateur ou machine génératrice.

5 . Dispositif selon la revendication 3, caractérisé en ce que lesdits moyens de comptage-décomptage (650) sont constitués par :

– un premier compteur (6500) et une mémoire à circuit NON-ET (6501) recevant les impulsions représentatives de la vitesse moteur et permettant d'engendrer un signal d'autorisation de comptage,

– un compteur d'initialisation (6502) recevant d'une part ledit signal d'autorisation de comptage et d'autre part les impulsions représentatives de la vitesse de rotation machine génératrice,

– un décompteur (6503) recevant en liaison parallèle un signal représentatif de l'état de comptage du compteur d'initialisation (6502).

6 . Dispositif selon la revendication 3, caractérisé en ce que le décodeur (660) est constitué par un décodeur NON-ET recevant en liaison parallèle un signal représentatif de l'état de décomptage du décompteur (6503) et permettant d'engendrer ledit signal logique de présence glissement courroie pour des valeurs remarquables de l'état de décomptage du décompteur (6503).

7 . Dispositif selon la revendication 3, caractérisé en ce qu'il comporte en outre des moyens de synchronisation ou séquenceurs (680) comprenant un compteur de synchronisation (6800) délivrant en sortie des états logiques de référence (QA,QB,QC) et des portes logiques (6801), (6802).

8. Dispositif selon la revendication 3, caractérisé en ce que les moyens (670) de commande affichage défaut assurent un comptage d'un nombre déterminé d'impulsions de séquencement délivrées par le compteur de synchronisation (6800) afin d'engendrer, pour un nombre correspondant desdites impulsions, ledit signal de commande d'affichage présence glissement.

## FIG_1

FIG.2

FIG_3